Europäisches Patentamt

(19) European Patent Office

Office européen des brevets

(11) Publication number: **0 015 095**
**B1**

(12) **EUROPEAN PATENT SPECIFICATION**

(45) Date of publication of patent specification: **01.02.84**

(51) Int. Cl.³: **H 01 L 31/02,**
**H 01 L 33/00, G 02 B 7/26**

(21) Application number: **80300337.5**

(22) Date of filing: **05.02.80**

(54) **An optoelectronic semiconductor device.**

(30) Priority: **09.02.79 JP 14471/79**

(43) Date of publication of application:
**03.09.80 Bulletin 80/18**

(45) Publication of the grant of the patent:
**01.02.84 Bulletin 84/5**

(84) Designated Contracting States:
**DE FR GB SE**

(56) References cited:
**DE - A - 2 747 773**
**DE - B - 1 140 654**
**FR - A - 2 387 517**
**US - A - 4 115 150**

(73) Proprietor: **FUJITSU LIMITED**
**1015, Kamikodanaka Nakahara-ku**
**Kawasaki-shi Kanagawa 211 (JP)**

(72) Inventor: **Inagaki, Nobuhiro**
**816-1-5-913 Nagata-cho**
**Minami-Ku, Yokohama-shi Kanagawa 232 (JP)**
Inventor: **Kitamura, Eiichi**
**5-12-A-204 Tsutsujigaoka Midori-ku**
**Yokohama-shi Kanagawa 227 (JP)**
Inventor: **Namazu, Ryosuke**
**60-18 Shiratoridai**
**Midori-ku, Yokohama-shi Kanagawa 227 (JP)**

(74) Representative: **Allman, Peter John et al,**
**Marks and Clerk Scottish Life House Bridge Street**
**Manchester M3 3DP (GB)**

Courier Press, Leamington Spa, England.

## An optoelectronic semiconductor device

The present invention relates to an optoelectronic semiconductor device which comprises an element housing or cap through which an optical fiber penetrates for transmitting light into or out of the device, the optical fiber being secured in the element housing by a body of sealing resin.

After optoelectronic semiconductor devices are produced the products are tested in order to define the characteristics thereof. Various optical signal transmission systems are available and the use of the optoelectronic semiconductor device is based on the result of the tests. In the past, the result of the test of the optical output power of the device differed from the actual amount of optical output power transmitted through an optical transmission fiber because the light detected in the test included light transmitted via the optical fiber and also light transmitted through the resin body. Therefore, the reliability of the result of the characteristic tests is degraded.

German Patent Specification No. DE—B—1140654 discloses an arrangement in which the optical fiber of an optoelectronic device is sealed in a housing by a glass ring which absorbs light received by the device.

It is preferred to use a sealing resin rather than other materials such as glass because of the relative ease with which a resin material may be applied. However, resin materials which have characteristics that are appropriate to securing the optical fiber to the cap do not have ideal light absorption characteristics.

It is an object of the present invention to improve optoelectronic semiconductor devices incorporating resin seals so that reliable characteristic test results can be obtained.

According to the present invention, there is provided an optoelectronic semiconductor device comprising:

an optoelectronic semiconductor element (2);

an element housing (3, 8) which sealingly covers said element;

an optical fiber (10) arranged through a through hole (9) which is formed in said element housing, one end of said fiber facing said optoelectronic semiconductor element, and the other end projecting out of said element housing by a predetermined length; and

a resin material disposed around said optical fiber within said element housing, characterized in that said resin material comprises a first resin (17) for securing said optical fiber to said element housing and a second resin (18) for absorbing the light emitted from or received by said optoelectronic semiconductor element arranged around the fiber (10) where it emerges from the through hole (9).

Figure 1 is a sectional view of an optoelectronic semiconductor device according to the prior art which comprises an optical fiber;

Figure 2 is a diagrammatic illustration of a method for testing the optical output power of light transmitted from the end of the optical fiber of the device of Figure 1.

Figure 3 is a sectional view of an optoelectronic semiconductor device according to the present invention;

Figure 4 is a graphical view representing the results obtained by performing optical output power tests on the devices of Figure 1 and Figure 3.

Figure 5 (a) and (b) are diagrammatic views showing light beams introduced into optical fibers each of which is enclosed by a resin material having a different refractive index from that of the fiber.

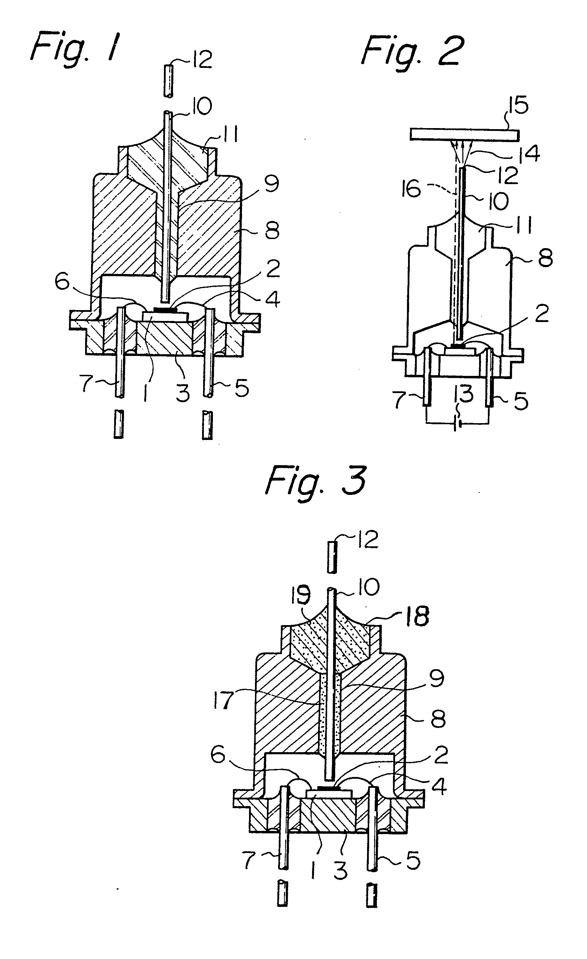

A known optoelectronic semiconductor device which houses a light emitting diode (LED), a photo diode or a photo transistor for use in an optical signal transmission system is illustrated in Figure 1. In Figure 1, reference numeral 1 designates a beryllium oxide (BeO) plate for electrically insulating an optoelectronic semiconductor element from the device body. Both surfaces of the plate 1 are plated with gold (Au). A light emitting diode chip 2 is bonded on one surface of the plate 1. The plate 1 is mounted on a main surface of a stem (or mounting) 3. A terminal pad of the cathode of the chip 2 is electrically connected to an external lead 5 through a wire 4. The upper surface of the plate 1 to which the anode surface of the chip is bonded is electrically connected to an external lead 7 through a wire 6. The chips 2, wires 4, 6 and the external leads 5, 7 of e.g. Kovar are protected by a metal cap 8. The metal cap 8 has a central through hole 9. An optical fiber 10 is inserted into the hole 9 and secured to the cap 8 by means of a sealing resin 11. The cap 8 and the stem 3 are welded together so as to form an optoelectronic semiconductor device body. The distance between the upper surface of the chip 2 and the lower end surface of the optical fiber 10 is adjusted so that a desired optical connecting efficiency between the chip and the fiber is obtained. The optical axis of the chip 2 is aligned with the optical axis of the optical fiber 10. The projection length of the optical fiber 10 out of the cap 8 is about 1 cm. The optical fiber 10 is connected to a long optical transmission fiber through a connector (not shown).

The inner diameter of the through hole 9 of the cap 8 is larger than the outer diameter of the optical fiber 10 so that the optical fiber 10 can be easily inserted into the through hole 9. Therefore, said sealing resin 11 is necessitated so as to fill the hole. In the past, the resin material was chosen from the viewpoint of bonding ability, characteristic with respect to temperature, or pureness of the material. The transparency of the material was not taken into consideration. In this respect, the prior art device will be described referring to Figure 2. Figure 2 shows an optical output power test of the light emitting from the end 12 of the fiber of the device of Figure 1. When the light emitting diode chip 2 is biased in the correct direction by a battery 13, the chip emits light. The light 14 (shown by solid arrows) radiates from the fiber end 12 and is received by a photo diode 15. The electric current generated by the light in the photo diode 15 is converted to a voltage which is measured by a digital voltage meter; thereby, the optical output power from the optical fiber 10 can be measured. However, in this measurement, the light 16 which passes through the space between the metal cap 8 and the optical fiber 10, as illustrated by an arrow in a broken line, is also received by the photo diode 15 through the resin 11. Therefore, the measured output power is greater than the effective output power of the light 14 which is emitted from the fiber end.

In Figure 3, which is a sectional view of an optoelectronic semiconductor device of the present invention, like parts as in Figure 1 are designated by like numerals. The optoelectronic semiconductor device illustrated in Figure 3 is constructionally the same as that illustrated in Figure 1, except that the through hole 9 in the cap 8 is filled by a first resin 17 for securing the optical fiber 10 to the metal cap 8 and a second resin 18 is arranged around the fiber 10 where it emerges from the through hole 9.

The first resin 17 is chosen from the viewpoint of its thermohardening property or its securing ability in order to reliably secure the optical fiber 10 to the cap 8. The second resin 18 is chosen mainly from the viewpoint of its light absorption ability. The first resin 17 is, for example, "epoxy resin H74" produced by Epoxy Technology Inc., U.S.A. The second resin 18 is, for example, "silicone resin JCR SH6102" produced by Toray Silicone Inc., Japan. The epoxy resin H74 assumes a brown colour after thermohardening and permits light to pass therethrough to some degree. The silicone resin JCR SH 6102 assumes a black colour and absorbs light effectively. Therefore, a part of the light, e.g. light of a wave length of 0.82 $\mu$m emitted from the light emitting diode, passes through the epoxy resin H74 and then it is absorbed by the silicone resin JCR SH6102.

In the device using the above resins, the light, which enters the space between the metal cap 8 and the optical fiber 10, emitted from the light emitting diode 2 or reflected by the inside surface of the device is substantially absorbed by the second resin 18, because the resin 18 is chosen beforehand so that it is able to absorb the light from the light emitting diode 2. Therefore, the optical power of the light from the end surface 19 of the resin, which light corresponds to the light 16 of Figure 2, is negligible relative to the optical power of the light from the optical fiber 10, which light corresponds to the light 14 of Figure 2. Accordingly, the optical output power of the light from the optical fiber end can be correctly measured in the test mode shown in Figure 2.

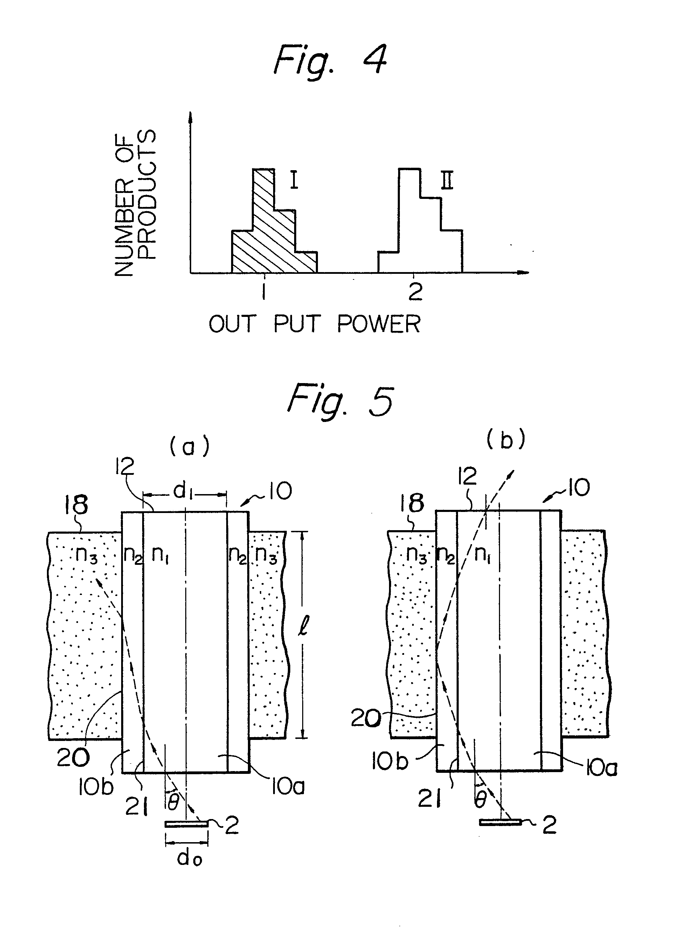

Figure 4 represents the results of the optical output power measurements of two optoelectronic semiconductor devices, each having an optical fiber 10 which is sealingly secured to the device in one case by the resin 11 (Figure 1) and in the other case by a resin which absorbs light emitted by the device. The abscissa represents the optical output power calibrated in absolute number. The ordinate represents the number of the devices. There are two groups I and II around the marks 1 and 2 of the abscissa. Group I comprises devices using a resin of high absorption ability. Group II comprises devices as shown in Figure 1 using the resin 11 of low absorption ability. In group II, the devices of high output power are more in number than the devices of low output power, while in group I, the devices of high output power are less in number than the devices of low output power.

Since each diode chip 2 of the devices has an equal emission intensity value, the output power difference between the groups I and II is due to the difference of the optical power of the light which passes through the resin. The light is intercepted in the resin 18 according to the present invention. Therefore, the above difference corresponds to the amount of the light which has passed through the resin 11.

Referring to Figure 5, the sealing resin 18 will now be described from the viewpoint of its refractive index as compared with the refractive index of the optical fiber 10. In the light which enters the step index type optical fiber 10 from the light emission diode 2, the effective light is the light which enters at an incidence angle less than the critical incidence angle $\theta_0$ which is dependant upon the numerical aperture NA of the optical fiber 10. The critical incidence angle $\theta_0$ is defined as follows;

$$\theta_0 = \sin^{-1} NA = \sin^{-1}\sqrt{n_1{}^2 - n_2{}^2}$$

in which $n_1$ is the refractive index of the core 10a of the optical fiber 10 and $n_2$ is the refractive index of the clad layer 10b of the optical fiber 10.

In the following description, the light enters the fiber at an incidence angle $\theta$ which is greater than $\theta_0$. The arrangement of the media is the same as that of Figure 3. The refractive index of the resin 18 is $n_3$. The diameter of the core 10a is $d_1$. The length of the optical fiber 10 adjacent to the resin 18 is l. The length l can be regarded as l $\gg$ $d_1$. If $n_2$ is smaller than $n_3$, the light from the diode 2 into the optical fiber 10 at the angle $\theta$ advances as shown by the broken line in Figure 5 (a), while if $n_2$ is greater than $n_3$, the light advances as shown by the line in Figure 5 (b), according to Snell's Law with respect to refraction. In the case that $n_2$ is smaller than $n_3$, the light introduced at the angles $\theta$ which is greater than $\theta_0$ penetrates into the resin 18 and is absorbed therein, as depicted in Figure 5 (a), instead of being reflected in the boundary surface 20 between the resin 18 and the clad layer 10b, which is the case if $n_2$ is greater than $n_3$, as depicted in Figure 5 (b). The effective transmission light is the light which penetrates directly within the core 10a or the light which is reflected in the boundary surface 21 between the clad layer 10b and the core 10a. The light reflected in the boundary surface 20 is non-effective light for the optical signal transmission. The amount of the non-effective light increases if the diameter $d_0$ of the diode increases or if the diameter $d_1$ of the core 10a decreases.

The resin 18 of Figure 3 preferably has the characteristic that its refractive index $n_3$ is greater than the refractive index $n_2$ of the clad layer 10b of the optical fiber 10, in addition to having the characteristic that it absorbs the light from the diode 2. Such a resin can remove the non-effective light for the optical signal transmission so that all the light transmitted through the optical fiber 10 can be effectively used for the optical signal transmission.

In the actual use of the device, the wave length of the light of the light emitting diode is 0.82 $\mu$m, the core of the optical fiber mode of quartz has a refractive index of 1.469, the clad layer of the optical fiber has a refractive index of 1.469, the first epoxy resin 17 (H74) has a refractive index of 1.5, and the second silicone resin 18 (JCR SH6102) has a refractive index of about 1.5.

The epoxy resin 18 of Figure 3 can be discriminated from the epoxy resin 11 of Figure 1 by its colour. Generally, the resin of low absorption ability assumes a brown colour while the resin of high absorption ability assumes a black colour. However, the present invention is not limited to black coloured resin.

As mentioned before, in the optical output power test of the optoelectronic semiconductor device according to the present invention, the result of the test reliably corresponds to the actual effective optical power from the optical fiber end because the light which passes outside the optical fiber is almost completely absorbed by the resin. Also, in the present invention, the non-effective light for the optical signal transmission can be removed from the fiber end by using a resin of adequate refractive index so as to remove the light which passes through the clad layer of the optical fiber.

In the above mentioned embodiment, the second resin 18 constitutes a light absorbing means. In order to enhance the light absorbing ability, further resin or paint material of a high absorption coefficient may be coated on the exposed surface of the resin 17, 18 either outside or inside the cap 8.

The first resin 17 may have a greater refractive index than does the clad layer 10b of the optical fiber 10 so as to remove the non-effective light of the optical signal transmission from the fiber for absorption.

The optoelectronic semiconductor element is not limited to a light emitting diode. The element may be a photo diode or a photo transistor etc.

**Claims**

1. An optoelectronic semiconductor device comprising:

an optoelectronic semiconductor element (2);
an element housing (3, 8) which sealingly covers said element;
an optical fiber (10) arranged through a through hole (9) which is formed in said element housing, one end of said fiber facing said optoelectronic semiconductor/element, and the other end projecting out of said element housing by a predetermined length; and
a resin material disposed around said optical fiber within said element housing, characterized in that said resin material comprises a first resin (17) for securing said optical fiber to said element housing and a second resin (18) for absorbing the light emitted from or received by said optoelectronic semiconductor element arranged around the fiber (10) where it emerges from the through hole (9).

2. An optoelectronic semiconductor device according to claim 1, further characterized in that said optoelectronic semiconductor element comprises a light emitting diode.

3. An optoelectronic semiconductor device according to Claim 1, further characterized in that said optoelectronic semiconductor element comprises a photo diode.

4. An optoelectronic semiconductor device according to Claim 1, further characterized in that said optoelectronic semiconductor element comprises a photo transistor.

5. An optoelectronic semiconductor device according to any one of the preeceding claims, further characterized in that one or both of said first and second resins has a larger refractive index than the clad layer of said optical fiber.

**Revendications**

1. Dispositif opto-électronique à semi-conducteur, comprenant:

un élément semi-conducteur opto-électronique (2);
un boîtier (3, 8) d'élément qui couvre de manière étanche ledit élément;

une fibre optique (10) disposée dans un trou passant (9) qui est ménagé dans ledit boîtier d'élément, une extrémité de ladite fibre étant tournée vers ledit élément semi-conducteur opto-électronique, et l'autre extrémité faisant saillie hors dudit boîtier d'élément d'une longueur prédéterminée; et

une matière du type résine placée autour de ladite fibre optique à l'intérieur dudit boîtier d'élément, caractérisé en ce que ladite matière de type résine comprend une première résine (17) destinée à fixer ladite fibre optique audit boîtier d'élément et une deuxième résine (18) destinée à absorber la lumière émise ou reçue par ledit élément semi-conducteur opto-électronique et placée autour de la fibre (10) à l'endroit où elle émerge du trou passant (9).

2. Dispositif opto-électronique à semi-conducteur selon la revendication 1, caractérisé en outre en ce que ledit élément semi-conducteur opto-électronique comprend une diode électroluminescente.

3. Dispositif opto-électronique à semi-conducteur selon la revendication 1, caractérisé en outre en ce que ledit élément semi-conducteur opto-électronique comprend une photodiode.

4. Dispositif opto-électronique à semi-conducteur selon la revendication 1, caractérisé en outre en ce que ledit élément semi-conducteur opto-électronique comprend un phototransistor.

5. Dispositif opto-électronique à semi-conducteur selon l'une quelconque des revendications précédentes, caractérisé en outre en ce que l'une desdites première et deuxième résines, ou les deux, possède un indice de réfraction plus grand que celui de la couche de revêtement de ladite fibre optique.

**Patentansprüche**

1. Opto-elektronische Halbleitervorrichtung mit:

einem opto-elektronischen Halbleiterelement (2),

einem Elementgehäuse (3, 8), welches das genannte Element versiegelnd abdeckt,

einer optischen Faser (10), welche durch ein Loch (9), welches in dem genannten Elementgehäuse ausgebildet ist, angeordnet ist, wobei ein Ende der genannten Faser dem genannten opto-elektronischen Halbleiterelement zugewandt ist und das andere Ende aus dem genannten Elementgehäuse um eine vorbestimmte Länge vorsteht, und mit einem Harzmaterial, welches um die genannte Faser innerhalb des Elementgehäuses angeordnet ist, dadurch gekennzeichnet, daß das Harzmaterial ein erstes Harz (17) zur Sicherung der genannten optischen Faser an dem Elementgehäuse und ein zweites Harz (18) zur Absorption des Lichtes umfaßt, welches von dem genannten opto-elektronischen Halbleiterelement emittiert oder empfangen wird und dort um die Faser (10) angeordnet ist, wo diese aus dem Loch (9) austritt.

2. Opto-elektronische Halbleitervorrichtung nach Anspruch 1, ferner dadurch gekennzeichnet, daß das genannte opto-elektronische Halbleiterelement eine Leuchtdiode umfaßt.

3. Optoelektronische Halbleitervorrichtung nach Anspruch 1, ferner dadurch gekennzeichnet, daß dieses genannte opto-elektronische Halbleiterelement eine Photodiode umfaßt.

4. Opto-elektronische Halbleitervorrichtung nach Anspruch 1, ferner dadurch gekennzeichnet, daß das genannte opto-elektronische Halbleiterelement einen Phototransistor umfaßt.

5. Opto-elektronische Halbleitervorrichtung nach einem der vorhergehenden Ansprüche, ferner dadurch gekennzeichnet, daß eines oder beide Harze einen größeren Brechungsindex als die Auskleidungsschicht der genannten optischen Faser aufweisen.

Fig. 1

Fig. 2

Fig. 3

# Fig. 4

# Fig. 5

(a)       (b)